# FASCICULE DE BREVET EUROPEEN

(11) **EP 0 788 857 B1**
(45) Date de publication et mention de la délivrance du brevet: **04.09.2002**
(21) Numéro de dépôt: 97100580.6
(22) Date de dépôt: 16.01.1997
(51) Int. Cl.: B23D 57/00, B28D 5/04

(54) **Dispositif de sciage par fil**
Drahtsägevorrichtung
Wire sawing device

(30) Priorité: 06.02.1996 CH 30396
(43) Date de publication de la demande: 13.08.1997
(73) Titulaire: HCT Shaping Systems SA, 1033 Cheseaux (CH)
(72) Inventeur: Hauser, Charles, Genolier (CH)
(74) Mandataire: Micheli & Cie

(56) Documents cités:
- DE-A- 2 428 111
- US-A- 4 134 384
- PATENT ABSTRACTS OF JAPAN vol. 17, no. 537 (M-1487), 28 Septembre 1993 & JP 05 146968 A (SHIN ETSU HANDOTAI CO LTD ET AL), 15 Juin 1993,

## Description

La présente invention concerne un dispositif de sciage par fil comprenant un bâti et une nappe de fils tendue entre au moins deux cylindres guide-fils et maintenue en position par des gorges prévues sur la surface desdits cylindres guide-fils et qui définissent l'intervalle entre les fils de ladite nappe qui sont susceptibles de se déplacer selon un mouvement alternatif ou continu en appui contre une pièce à scier montée sur un support, chaque cylindre guide-fils présentant un revêtement extérieur comportant au moins deux segments amovibles susceptibles d'être fixés à la périphérie d'une partie cylindrique centrale des cylindres guide-fils.

On connaît des dispositifs de sciage par fil comprenant de manière générale une nappe de fils susceptible de se déplacer selon un mouvement continu ou alternatif en appui contre une pièce à scier définissant ainsi une zone de sciage. La zone de sciage est constituée d'un ensemble de cylindres placés parallèlement. Ces cylindres, appelés guide-fils, sont gravés avec des gorges définissant l'intervalle entre les fils de la nappe, soit l'épaisseur des tranches. La pièce à scier est fixée sur une table support qui se déplace perpendiculairement à la nappe de fils. La vitesse de déplacement définit la vitesse de coupe. Le renouvellement du fil ainsi que le contrôle de sa tension se fait dans une partie appelée zone de gestion du fil située en dehors de la zone de sciage proprement dite. L'agent qui régira la découpe est soit un abrasif fixé sur le fil, soit un abrasif libre amené sous forme de barbotine. Le fil n'agit que comme transporteur.

Lors de la découpe en tranches fines de la pièce à scier, le fil tendu est à la fois guidé et tracté par les cylindres guide-fils. Ces cylindres généralement revêtus d'une couche en matière synthétique sont gravés avec des gorges dont la géométrie et les dimensions doivent être d'une grande précision. Le procédé de découpe qui utilise un abrasif soit fixe, soit libre, entraîne nécessairement une usure du matériau qui constitue la surface des cylindres guide-fils, donc modifie les dimensions et la géométrie desdites gorges. Les cylindres guide-fils sont habituellement constitués d'une partie monobloc creuse ou pleine revêtue par un élément synthétique dans lequel sont gravées les gorges maintenant l'espacement des fils de la nappe et fixées au moins à l'une de ses extrémités par un ou des paliers contenant les roulements. Le cylindre guide-fils est démontable pour pouvoir le reconditionner après usure de son revêtement.

Le brevet US 4.134.384 décrit de tels cylindres guide-fils comportant un membre tubulaire extérieur avec des couches en polyuréthane et une couche en acier INVAR. La demande de brevet JP 0,514,696,8 décrit un type de cylindre guide-fils métallique avec des gorges de guidage pour les fils et un revêtement en matière synthétique recouvrant ce cylindre guide-fils.

Ces cylindres guide-fils qui constituent des éléments d'usure ont une durée de vie limitée et les gorges prévues à leur surface doivent être périodiquement retaillées par rectification, ou par tournage. Cette opération se fait en dehors du dispositif de sciage sur une rectifieuse cylindrique ou un tour à commande numérique par exemple. Le nombre de retaillages dépend de l'importance de chaque taillage, de la géométrie des gorges et de l'épaisseur initiale du revêtement. Lorsque le revêtement est complètement utilisé, on procède à la pose d'un nouveau revêtement par moulage, injection ou toute méthode qui s'avère adéquate pour le revêtement choisi. Lorsqu'un retaillage s'avère nécessaire, les cylindres guide-fils doivent être démontés et sortis du dispositif de sciage. Cette opération est généralement lourde en raison de la complexité mécanique des cylindres guide-fils et de leur système d'entraînement. De plus cela nécessite l'assistance de manutention extérieure. On aura donc un arrêt du dispositif de sciage important qui diminuera la productivité globale de l'ensemble. Lors du changement de l'épaisseur des tranches à scier, un changement du pas des gorges taillées sur la surface des guide-fils est obligatoire et nécessite également le changement des cylindres guide-fils, opération longue et complexe donc peu souhaitable.

La précision des tranches, très importante pour des applications électroniques, dépend de la position des fils au cours du sciage ainsi que des éléments de support de la pièce à scier, donc de la position des cylindres guide-fils par rapport à la pièce à scier, mais aussi de la qualité de la géométrie des gorges taillées à la surface des guide-fils. Une usure de celles-ci provoque une dégradation de la précision des tranches obtenues. Il est clair que l'arrêt du dispositif de sciage pour le réusinage des gorges ne se fait qu'en toute nécessité et donc que l'on a tendance à repousser celui-ci jusqu'à la dernière extrémité, entraînant par ce fait une baisse de la qualité moyenne des tranches ainsi obtenues.

Le document DE 2.428.111 A représentant l'état de la technique le plus proche, décrit un dispositif de sciage par fil avec des cylindres guide-fils comportant deux segments amovibles susceptibles d'être fixés à la périphérie d'une partie cylindrique centrale du cylindre guide-fils.

Cette partie centrale est montée d'un côté sur le bâti de la machine et comprend une extrémité libre sur laquelle est fixé un couvercle grâce à une vis centrale. Ce couvercle est muni d'une pièce de maintien agencée de façon à centrer et à maintenir les deux segments formant une surface extérieure continue. Si on désire remplacer les segments, il est nécessaire d'enlever le couvercle avec la pièce de maintien. Ensuite il est possible d'ôter les segments en les dégageant axialement à une pièce de maintien opposée.

La machine selon ce document permet donc un échange du revêtement extérieur en démontant la pièce de maintien à l'extrémité libre du cylindre guide-fils et en dégageant axialement les segments. Etant donné que les cylindres guide-fils ne sont maintenus qu'à une de leurs extrémités, leur parallélisme n'est pas garanti du fait des efforts élevés exercés par les fils de la nappe de fils. Les tranches sciées peuvent de ce fait présenter des imprécisions géométriques qui interdisent leur usage pour certaines applications.

Lorsqu'on maintient les cylindres guide-fils par les deux extrémités supportées par le bâti, il n'est plus possible de démonter et d'échanger les segments et le revêtement extérieur des cylindres guide-fils sans un démontage complet de ces cylindres guide-fils, ce qui est une opération compliquée nécessitant un arrêt prolongé de la machine.

La présente invention a donc pour but de réaliser un dispositif de sciage assurant une grande précision des tranches sciées du fait d'un maintien des cylindres guide-fils par leurs deux extrémités, tout en permettant un échange rapide et aisé du revêtement extérieur des cylindres guide-fils sans devoir démonter les cylindres guide-fils du bâti du dispositif de sciage.

Le dispositif sciage est caractérisé à cet effet par le fait que les segments sont fixés sur ladite partie cylindrique centrale par des organes de fixation disposés dans des évidements prévus sur la surface extérieure cylindrique du cylindre guide-fils parallèlement à l'axe de ce dernier, ladite partie cylindrique centrale étant supportée à ses deux extrémités par le bâti.

On obtient ainsi un renouvellement ou une régénération très rapide et aisée des gorges guide-fils et une amélioration de la précision des tranches par le fait que la régénération de la surface est facilitée et peu compliquée. Les changements du pas des gorges par la modification de l'épaisseur des tranches sont également grandement facilités.

Ainsi, pour éviter le démontage de l'ensemble des cylindres guide-fils en vue d'un réusinage des gorges, on peut faire l'opération en changeant uniquement la surface des cylindres guide-fils en leur rapportant une surface amovible fixée mécaniquement, avec ou sans collage. Le taillage des gorges peut se faire in situ dans le dispositif de sciage par un mécanisme de retaillage qui permet de réusiner celles-ci sur la surface des cylindres guide-fils sans démontage de ceux-ci, ou avant montage des segments amovibles sur un tour ou une rectifieuse à commande numérique par exemple. Cela permet ainsi la régénération après usure, ou le changement du pas des gorges pour la modification de l'épaisseur des tranches.

Cette technique de sciage qui requiert une géométrie parfaite des gorges verra la précision des tranches augmenter par le fait que la régénération de la surface est facilitée par l'interchangeabilité rapide des segments amovibles rapportés et que le taillage peut être fait in situ ou avant montage, sur les segments amovibles.

Les exigences de productivité et de précision des applications à usage semi-conducteur, liées aux dimensions grandissantes des pièces à scier donc des tranches, nécessitent que, même de petites variations doivent être évitées. L'utilisation de segments rapportés prétaillés ou non, permet la régénération de la surface ou le changement de pas de manière aisée donc plus fréquente. De plus, elle nécessite des investissements supplémentaires faibles puisque seuls les segments sont nécessaires et non la totalité des cylindres guide-fils.

L'invention permet donc au dispositif de sciage de par le concept de l'interchangeabilité de la surface des cylindres guide-fils et par l'utilisation de segments amovibles de répondre aux nouvelles exigences de la technologie en supprimant une opération longue et fastidieuse qui est le démontage complet des cylindres guide-fils tout en améliorant la qualité des performances tant géométriques que de productivité. Le dispositif de sciage comprend donc des cylindres guide-fils avec surface interchangeable avantageusement sous forme de segments amovibles tenus mécaniquement ou par collage et ayant leur surface prétaillée avec des gorges ou non.

Les cylindres guide-fils avec surface interchangeable se présenteront sous la forme d'un cylindre de base pouvant recevoir sur sa surface et avec une position indexée des segments revêtus ou non sur lesquels sont gravées les gorges servant à l'espacement des spires du fil de sciage. Ces gorges peuvent être prétaillées sur une machine de taillage extérieure ayant des positions d'indexation identiques à celles du cylindre guide-fils, ceci pour garantir la position des gorges après montage sur le dispositif de sciage par fils.

L'utilisation du concept de l'interchangeabilité de la surface permet donc de réaliser un dispositif de sciage performant ayant une productivité élevée, une précision moyenne accrue et permettant aisément de modifier l'épaisseur des tranches produites.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution et une variante.

La figure 1 est une vue en perspective d'un mode d'exécution du dispositif de sciage par fil.

La figure 2 est une vue en perspective d'un cylindre guide-fils.

La figure 3 représente une variante du cylindre guide-fils.

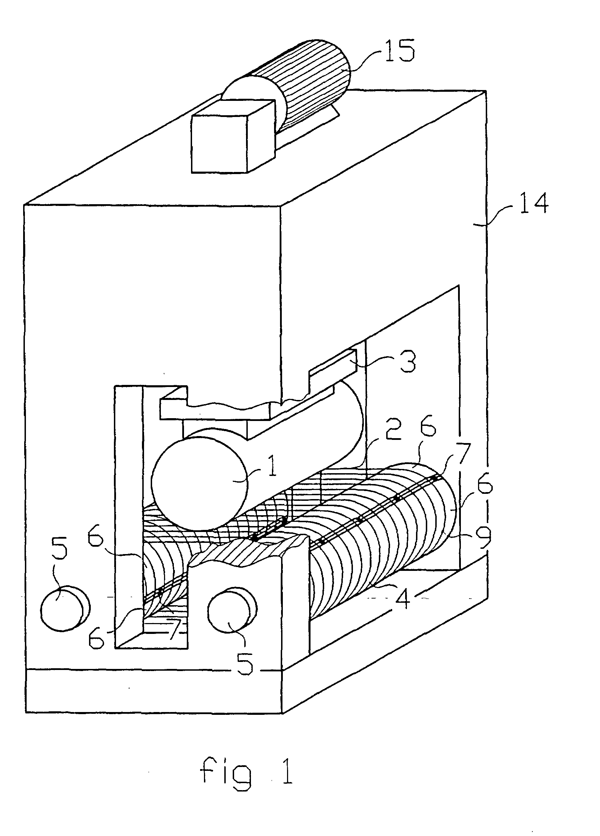

Le dispositif de sciage par fil de la figure 1 illustre le principe de la présente invention. La pièce à scier 1 est mise en appui contre la nappe de fils 2 supportée par les cylindres guide-fils 4. La table-support 3 sur laquelle est fixée la pièce à scier 1 est mue par le moteur 15. Les cylindres guide-fils 4 sont supportés à leurs extrémités par des paliers 5. Les segments amovibles 6 sont fixés mécaniquement sur la surface des cylindres guide-fils 4 par des vis 7. L'ensemble est monté dans un bâti 14. Les fils de la nappe 2 sont susceptibles d'être entraînés par des moyens connus de façon à être déplacés selon un mouvement alternatif ou continu. La surface extérieure des segments 6 comprend des gorges gravées 9 dans lesquelles le fil et placé. Ces gorges 9 définissent l'intervalle entre les fils de la nappe 2, donc l'épaisseur des tranches sciées. Etant donné que les segments 6 sont fixés mécaniquement et/ou par collage sur la surface des cylindres guide-fils 4, il est possible de les renouveler ou de les changer après usure ou lorsqu'on désire modifier la distance séparant les gorges 9 sans pour autant démonter et mettre hors machine les cylindres guide-fils 4.

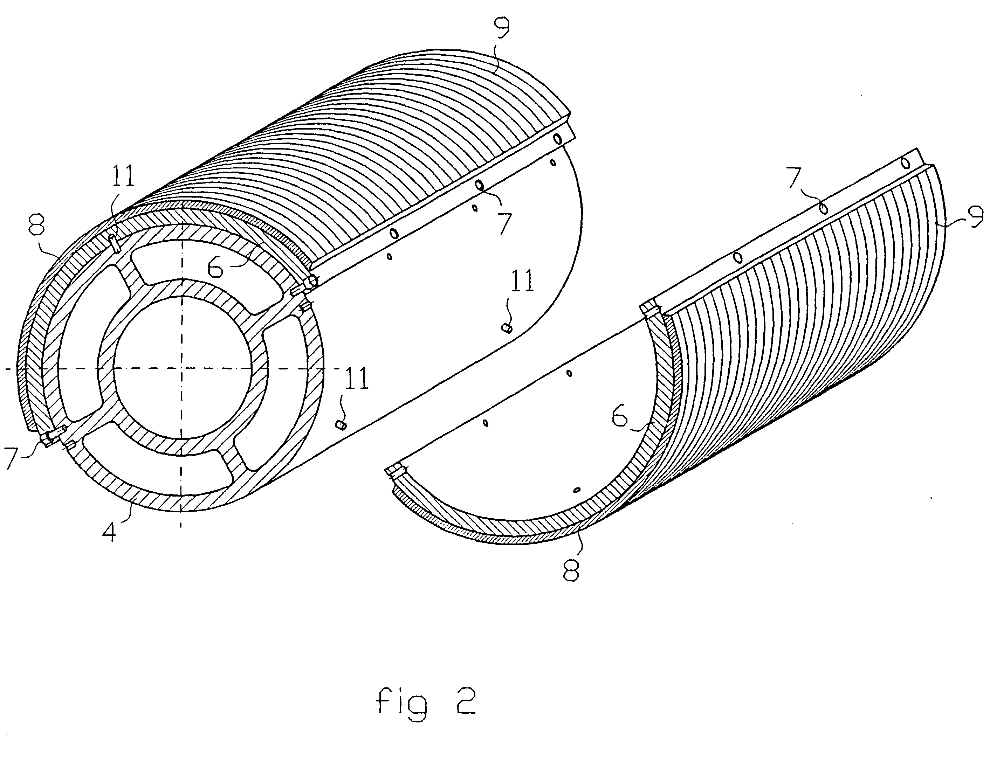

La figure 2 représente en perspective un cylindre guide-fils 4 à axe fixe, avec deux segments amovibles 6 revêtus d'une couche de polyuréthane 8 prétaillée avec des gorges 9 et fixées sur le cylindre guide-fils 4 mécaniquement par des vis de fixation 7. Les segments sont positionnés sur le cylindre guide-fils 4 par des goupilles de positionnement 11. Les segments amovibles 6 sont en métal et ce dernier est choisi de préférence à faible coefficient de dilatation, par exemple un alliage Fe-Ni.

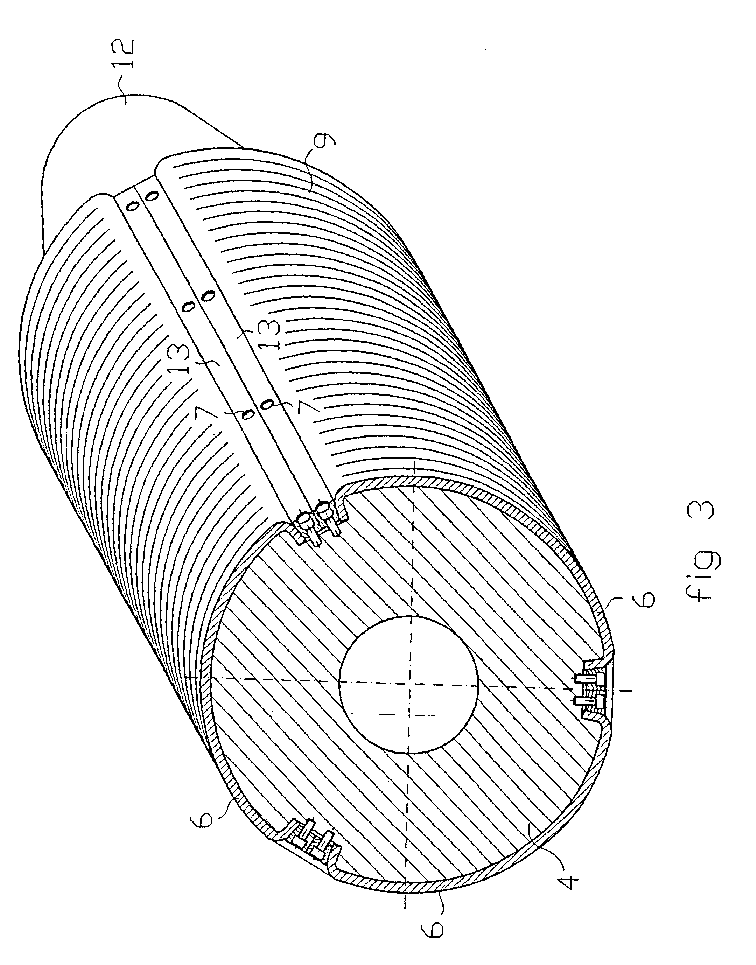

La figure 3 représente en perspective une variante du cylindre guide-fils 4 pour fixation sur des cônes 12. Les trois segments amovibles 6 sont des feuilles de matière synthétique, avantageusement du polyuréthane, tendues et serrées sur la surface par des languettes de bridage 13 fixées mécaniquement sur la surface par des vis 7. Un collage de la feuille polyuréthane 6 associé à une texture adéquate de la surface du cylindre guide-fils 4 maintient celle-ci en position sur la surface du cylindre guide-fils 4.

De façon générale, le fil de sciage formant la nappe de fils 2 entre les cylindres guide-fils 4 est constitué d'acier à ressort d'un diamètre compris entre 0.1 et 0.2 mm afin de scier des blocs de matériaux durs ou de compositions plus particulières, tels que silicium, céramique, composés des éléments des groupes III-V, GGG (Grenat Gadolinium-Gallium), saphir, etc, en tranches de 0.1 à 5mm d'épaisseur environ. L'agent abrasif est un produit du commerce et peut être du diamant, du carbure de silicium, de l'alumine, etc, sous forme fixée au fil ou sous forme libre en barbotine.

Le dispositif de sciage permet par le concept d'interchangeabilité de la surface des cylindres guide-fils 4 par l'adjonction de segments amovibles 6, d'obtenir un maximum de performances, de productivité et de flexibilité, sans que cela soit au détriment de la qualité des pièces produites.

Il est bien entendu que les modes de réalisation décrits ci-dessus ne présentent aucun caractère limitatif et qu'ils peuvent recevoir toutes modifications désirables à l'intérieur du cadre tel que défini par la revendication 1.

Ainsi, d'autres types de surfaces interchangeables peuvent être envisagés qui par leur concept ont également la fonction de régénération et/ou de renouvellement de la surface sans démontage des cylindres guide-fils 4. Par exemple, l'enroulement jointif d'une corde profilée ou d'une bande sur la surface peut être envisagé. Un rechargement par pulvérisation dans le dispositif de sciage par exemple, peut également satisfaire au concept d'interchangeabilité de la surface et à l'objet de la présente invention pour autant qu'elle n'exige pas le démontage complet du cylindre guide-fils 4.

## Revendications

1. Dispositif de sciage par fil comprenant un bâti (14) et une nappe de fils (2) tendue entre au moins deux cylindres guide-fils (4) et maintenue en position par des gorges (9) prévues sur la surface desdits cylindres guide-fils (4) et qui définissent l'intervalle entre les fils de ladite nappe (2) qui sont susceptibles de se déplacer selon un mouvement alternatif ou continu en appui contre une pièce à scier (1) montée sur un support (3), chaque cylindre guide-fils présentant un revêtement extérieur (8) comportant au moins deux segments amovibles (6) susceptibles d'être fixés à la périphérie d'une partie cylindrique centrale des cylindres guide-fils, **caractérisé par le fait que** les segments sont fixés sur ladite partie cylindrique centrale par des organes de fixation (7, 13) disposés dans des évidements prévus sur la surface extérieure cylindrique du cylindre guide-fils (4) parallèlement à l'axe de ce dernier, ladite partie cylindrique centrale étant supportée à ses deux extrémités par le bâti (14).

2. Dispositif selon la revendication 1, **caractérisé par le fait que** les segments amovibles (6) des cylindres guide-fils (4) sont en métal revêtu d'une matière synthétique (8) dans laquelle les gorges (9) sont taillées.

3. Dispositif selon la revendication 2, **caractérisé par le fait que** la matière synthétique est du polyuréthane.

4. Dispositif selon la revendication 2, **caractérisé par le fait que** ledit métal est choisi parmi les métaux à faible coefficient de dilatation.

5. Dispositif selon la revendication 1, **caractérisé par le fait que** les organes de fixation sont constitués par des vis (7) logées dans les évidements situés aux extrémités en regard des segments.

6. Dispositif selon la revendication 1, **caractérisé par le fait que** les cylindres guide-fils (4) comportent des goupilles de positionnement (11) assurant le positionnement des segments amovibles (6) sur la partie cylindrique centrale.

7. Dispositif selon la revendication 1, **caractérisé par le fait que** les segments amovibles (6) sont constitués par des feuilles de matière synthétique fixées et/ou collées sur la surface de la partie cylindrique centrale, les organes de fixation étant constitués par des languettes de bridage (13) fixées par des vis (7) sur la partie cylindrique centrale dans des évidements longitudinaux de la surface extérieure des cylindres guide-fils.

## Claims

1. Wire sawing device comprising a frame (14) and a layer of wires (2) stretched between at least two wire guide cylinders (4) and maintained in position by grooves (9) provided on the surface of said wire guide cylinders (4) and which define the interval between the wires of said layer (2) which are adapted to be displaced with an alternating or continuous movement whilst bearing against a piece (1) to be sawed mounted on a support (3), each wire guide cylinder (4) having an external cladding (8) comprising at least two removable segments (6) adapted to be fixed on the periphery of a central cylindrical portion of the wire guide cylinders, **characterised by** the fact that the segments are fixed on said central cylindrical portion by means of fixing members (7,13) disposed in hollows provided on the external cylindrical surface of the wire guide cylinders (4) parallely to the axes of the latter, said central cylindrical portion being supported by the frame (14) on its two extremities.

2. Device according to claim 1, **characterised by** the fact that the removable segments (6) on the wire guide cylinders (4) are of metal clad with a synthetic material (8) in which the grooves (9) are incised.

3. Device according to claim 2, **characterised by** the fact that the synthetic material is polyurethane.

4. Device according to claim 2, **characterised by** the fact that said metal is selected from metals with low coefficient of thermal expansion.

5. Device according to claim 1, **characterised by** the fact that the fixing members are constituted by screws (7) placed in the hollows located on the opposing extremities of the segments.

6. Device according to claim 1, **characterised by** the fact that the guide cylinders (4) comprise positioning pins (11) ensuring the positioning of the removable segments (6) on the central cylindrical portion.

7. Device according to claim 1, **characterised by** the fact that the removable segments (6) are constituted by sheets of synthetic material fixed and/or cemented on the surface of the central cylindrical portion, the fixing members being constituted by securement strips (13) fixed by screws (7) on the central cylindrical portion in longitudinal hollows of the external surface of the wire guide cylinders.

## Patentansprüche

1. Drahtsägevorrichtung mit einem Rahmen (14) und einer Drahtschicht (2), die zwischen mindestens zwei Drahtführungszylindern (4) gespannt und durch Rillen (9) an Ort und Stelle gehalten wird, die auf der Oberfläche der benannten Drahtführungszylinder (4) angebracht sind und den Abstand zwischen den Drähten der benannten Schicht (2) definieren, die befähigt sind, sich hin- und hergehend oder kontinuierlich zu bewegen, während sie gegen ein zu sägendes Werkstück (1) drücken, das auf eine Auflage (3) montiert ist, wobei jeder Drahtführungszylinder eine äusseren Bekleidung (8) aufweist, die zumindest zwei abnehmbare Abschnitte (6) aufweist, die befähigt sind, an der Peripherie eines zylindrischen Mittelstücks der Drahtführungszylinder befestigt zu werden, **dadurch gekennzeichnet, dass** die Abschnitte auf dem benannten zylindrischen Mittelstück durch Befestigungsorgane (7, 13) befestigt sind, die in Aussparungen angeordnet sind, die auf der zylindrischen Aussenseite des Drahtführungszylinders (4) parallel zu dessen Achse angebracht sind, wobei das benannte zylindrische Mittelstück an seinen beiden Enden durch den Rahmen (14) gehalten wird.

2. Vorrichtung nach Anspruch 1, **dadurch gekennzeichnet, dass** die abnehmbaren Abschnitte (6) der Drahtführungszylinder (4) aus Metall bestehen, das mit einem Kunststoff (8) überzogen ist, in den die Rillen (9) eingeschnitten sind.

3. Vorrichtung nach Anspruch 2, **dadurch gekennzeichnet, dass** der Kunststoff Polyurethan ist.

4. Vorrichtung nach Anspruch 2, **dadurch gekennzeichnet, dass** das benannte Metall unter den Metallen mit einem geringen Ausdehnungskoeffizienten gewählt ist.

5. Vorrichtung nach Anspruch 1, **dadurch gekennzeichnet, dass** die Befestigungsorgane aus Schrauben (7) bestehen, die in den Aussparungen sitzen, die sich gegenüber den Abschnitten an den Enden befinden.

6. Vorrichtung nach Anspruch 1, **dadurch gekennzeichnet, dass** die Drahtführungszylinder (4) Positionierstifte (11) umfassen, die die Positionierung der abnehmbaren Abschnitte (6) auf dem zylindrischen Mittelstück sicherstellen.

7. Vorrichtung nach Anspruch 1, **dadurch gekennzeichnet, dass** die abnehmbaren Abschnitte (6) aus Kunststofffolien bestehen, die auf der Oberfläche des zylindrischen Mittelstücks befestigt und/oder aufgeklebt sind, wobei die Befestigungsorgane aus Einspannzungen (13) bestehen, die auf dem zylindrischen Mittelstück durch Schrauben (7) in Längsaussparungen der Aussenseite der Drahtführungszylinder befestigt sind.
